# EUROPÄISCHE PATENTSCHRIFT

(11) **EP 1 053 912 B1**
(45) Veröffentlichungstag und Bekanntmachung des Hinweises auf die Patenterteilung: **22.09.2004**
(21) Anmeldenummer: 00107289.1
(22) Anmeldetag: 04.04.2000
(51) Int. Cl.: B60R 11/02

(54) **Armaturenbrett mit integriertem Richtmikrofon**
Dashboard with incorporated directional microphone
Tableau de bord avec microphone directionnel intégré

(30) Priorität: 18.05.1999 DE 19922731
(43) Veröffentlichungstag der Anmeldung: 22.11.2000
(73) Patentinhaber: Siemens Aktiengesellschaft, 80333 München (DE)
(72) Erfinder: Rühl, Hans-Wilhelm, Dr., 35606 Solms (DE)

(56) Entgegenhaltungen:
- DE-A- 19 744 130
- DE-A- 19 755 614
- FR-A- 2 714 875

## Beschreibung

Die Erfindung betrifft ein Armaturenbrett eines Kraftfahrzeuges mit einem Mikrofon, das mit einem elektronischen Gerät verbunden ist.

Bei dem elektronischen Gerät kann es sich beispielsweise um ein Mobiltelefon oder auch um ein Spracherkennungssystem handeln, das mit einem System zur Sprachsteuerung von Kraftfahrzeugfunktionen verbunden ist. Gerade bei einem Spracherkennungssystem ist es wichtig, daß die von einer Person geäußerten Sprachbefehle von dem System einwandfrei verstanden werden. Daher ist ein ausreichend gutes Signalrauschverhältnis erforderlich. In Kraftfahrzeugen ist jedoch eine Vielzahl von Nebengeräuschen vorhanden. Hierbei handelt es sich beispielsweise neben dem Motor- und Fahrgeräusch auch um Musik aus einer Audioanlage oder die Gespräche der Mitfahrer. Der Positionierung und Ausführung des Mikrofons kommt daher eine nicht unerhebliche Bedeutung zu.

Eine Verbesserung des Signalrauschverhältnisses für die Sprachsignale eines Fahrzeuginsassen kann auf verschiedene Weise erreicht werden. Da der Pegel des Sprachsignals mit wachsendem Abstand vom Mund des Sprechers abnimmt, und zwar näherungsweise um 6 dB bei einer Verdopplung des Abstandes, ist es vorteilhaft, das Mikrofon so nahe wie möglich am Mund des Sprechers anzuordnen.

Es sind verschiedene Anordnungen eines Mikrofons im Kraftfahrzeug bekannt.

Es ist bekannt, ein Mikrofon in den Wagenhimmel zu integrieren. Dies hat den Vorteil, daß das Mikrofon mit einem Abstand von etwa 30 bis 40 cm nah am Mund des Sprechers angeordnet ist und deshalb ein gutes Signalrauschverhältnis erreicht wird. Von Nachteil ist bei dieser Lösung jedoch die Kabelführung sowie die Einschränkung hinsichtlich des Designs.

Weiterhin ist es bekannt, ein Mikrofon am Sicherheitsgurt anzubringen. Solche Gurtmikrofone befinden sich mit einem Abstand von etwa 10 bis 20 cm zwar sehr nahe am Mund des Fahrers, sie nehmen aber beim Anlegen des Gurtes nicht automatisch die korrekte Position ein und sind dadurch nicht komfortabel nutzbar.

Darüber hinaus ist beispielsweise aus der DE 198 00 442 A1 eine Ausführungsform bekannt, bei der ein Mikrofon in die Sonnenblende eines Kraftfahrzeugs integriert ist. Von Nachteil ist bei dieser Ausführungsform, daß die Sonnenblende vor Benutzung des Mikrofons stets erst in die richtige Position gebracht werden muß.

Aus der EP 0 635 395 B1 ist eine Ausführungsform bekannt, bei der ein Mikrofon in den Innenspiegel eines Kraftfahrzeugs integriert ist. Nachteilig ist bei dieser Ausführungsform neben der Leitungsführung insbesondere, daß das Mikrofon weiter vom Fahrer als bei den vorgenannten Lösungen entfernt ist.

Weiterhin ist aus der DE 197 44 130 A1 eine Anordnung bekannt, bei der ein Einbaumikrofon in der Mittelkonsole oder dem Armaturenbrett eines Kraftfahrzeuges angeordnet ist. Eine solche Anordnung hat den Nachteil, daß sie vergleichsweise weit vom Sprecher entfernt ist und daher ebenfalls in hohem Maße Nebengeräusche, beispielsweise durch die Gespräche der Mitfahrer, aufnimmt.

Aus M. Dahl et al.: Simultaneous Echo Cancellation and Car Noise Suppression Employing a Microphone Array", ICASSP97, München, vol. 1, S. 239-242 ist der Einsatz einer Mikrofonzeile im Kraftfahrzeug bekannt. Nachteilig ist hierbei, daß die Mikrofonzeile aus einer Vielzahl von Einzelmikrofonen sowie nachgeschalteten Verarbeitungseinrichtungen augebaut werden muß, um die gewünschte Anhebung der Sprachsignale zu erzielen. Diese Ausführungsform ist daher konstruktiv aufwendig und teuer.

Eine solche Mikrofonzeile gehört in die Kategorie der Richtmikrofone. Allgemein erlauben Richtmikrofone eine gezielte Aufnahme von Signalen aus Schallquellen in einer Vorzugsrichtung (Nutzsignale), wobei Schallquellen, die nicht in der Vorzugsrichtung des Mikrofons liegen (Störsignale), in ihrem Signalpegel abgesenkt und damit weniger gut registriert werden. Verschiedene Ausführungsformen von Richtmikrofonen sind für andere Anwendungen bekannt. Eine Anhebung der Nutzsignale kann dabei auf dreierlei Weise erreicht werden:

Einfache Richtmikrofone: Bekannte Ausführungsformen von Mikrofonen beinhalten Schalldruckempfänger und Schallschnelleempfänger oder Kombinationen hiervon. Schalldruckempfänger empfangen Schall aus allen Richtungen gleichmäßig. Schallschnelleempfänger weisen dagegen eine Richtcharakteristik in Form einer Acht auf. Kombinationen der genannten Empfänger können darüber hinaus eine Richtcharakteristik in Form einer sogenannten Niere oder einer Superniere aufweisen. Durch eine entsprechende Richtcharakteristik kann die Empfindlichkeit der Mikrofone im Freifeld in Vorzugsrichtung um bis zu 8 dB erhöht werden.

Bei Einsatz im Kraftfahrzeug müssen die Mikrofone stets möglichst bündig mit einem Fahrzeugteil plaziert werden. Sie können daher nur als Grenzflächenmikrofon mit einer Richtcharakteristik parallel zur Oberfläche des Fahrzeugteils betrieben werden. Dies hat zur Folge, daß sich der Sprecher nicht mehr exakt in der Vorzugsrichtung befindet und nur geringere Anhebungen des Pegels von bis zu etwa 5 dB erzielt werden können.

Mikofonzeilen: Analog zum aus der Antennentechnik bekannten Verfahren der Elementarstrahlersynthese kann eine Mikrofonzeile, in der mehrere Einzelmikrofone räumlich versetzt angeordnet sind, das Schallfeld an verschiedenen Punkten abtasten. Die abgetasteten Signale werden dann mit einer geeigneten Laufzeitverzögerung so aufsummiert, daß die aus der Vorzugsrichtung der Zeile einfallenden Schallsignale phasengleich aufsummiert werden und sich so verstärken, während die Signale aus anderen Richtungen mit unterschiedlichen Phasenlagen aufsummiert werden und sich so ganz oder teilweise aufheben. Der Einsatz von Mikrofonzeilen im Kraftfahrzeug ist aus der oben genannten Veröffentlichung bekannt.

Mikrofone mit keulenförmiger Richtcharakteristik: Zu dieser Gruppe gehört das Rohrschlitzmikrofon oder Rohrrichtmikrofon, das in seiner allgemeinen Form aus einem an beiden Enden geschlossenen rohrförmigen Körper besteht, wobei der Verschluß am 'fernen' Ende eine Mikrofonkapsel enthält, die den Schall im Rohr aufnimmt. Schall kann in das Rohr durch einen seitlichen Schlitz oder durch eine entsprechende Reihe von kleinen Öffnungen eintreten. Betrachtet man nun den Schall im Rohr in Abhängigkeit von der Position einer äußeren Schallquelle, stellt man fest, daß nur Schall von Quellen in einer Position, auf die das 'nahe' Ende des Rohres zeigt, nach Eintritt durch den Schlitz und weiterem Durchlaufen des Rohres phasengleich an der Mikrofonkapsel eintrifft, während für alle anderen Einfallsrichtungen Laufzeitunterschiede und damit Absenkungen des Pegels des aufsummierten Signals auftreten. Das bedeutet, daß ein Rohrschlitzmikrofon wie eine Zeile von Mikrofonen vergleichbarer Länge arbeitet, aber zum Aufbau nur eine Mikrofonkapsel mit nachgeschalteter Verarbeitung braucht und daher mit vergleichsweise geringem Aufwand realisierbar ist.

Ein Richtmikrofon mit keulenförmiger Richtcharakteristik kann weiterhin auch als Parabolspiegel-Mikrofon wie eine Parabolantenne aufgebaut sein. D.h. die Anhebung von Signalen aus einer Vorzugsrichtung wird dadurch erreicht, dass die Signale aus der Vorzugsrichtung der Parabel auf den Brennpunkt der Parabel gespiegelt werden und dort mit gleicher Phasenlage und Laufzeit eintreffen. Im Brennpunkt der Parabel ist eine Mikrofonkapsel angebracht, die den Schall aufnimmt. Schall, der nicht aus der Vorzugsrichtung kommt, wird vorzugsweise nicht in den Brennpunkt gespiegelt und daher im Vergleich zu Schall aus der Vorzugsrichtung mit geringerem Pegel aufgenommen.

Nachteilig an kommerziell erhältlichen Parabolspiegel-Mikrofonen und Rohrschlitzmikrofonen ist, dass sie aufgrund ihrer Abmaße nur schwierig im Kraftfahrzeug positionierbar sind. Rohrschlitzmikrofone werden von verschiedenen Firmen mit Rohrlängen von 0,1 bis 0,4 m angeboten. Parabolmikrofone brauchen ausreichend reflektierende und fokussierende Fläche. Zu kurze Rohre und zu wenig Fläche führt zu einer zu geringen Richtcharakteristik.

In der nicht vorveröffentlichten WO-A-9949697 wird ein rohrförmiges Richtmikrofon beschrieben, das in einem oder in der Nähe eines Instrumententrägers eines Kraftfahrzeugs angeordnet werden kann.

Aufgabe der Erfindung ist es daher, ein Armaturenbrett mit einem Mikrofon derart zu verbessern, dass ein gutes Signal rauschverhältnis für die Sprache eines Fahrzeuginsassen, insbesondere des Fahrers, erreicht wird und die Lösung optisch unauffällig, preisgünstig und sicherheitstechnisch unbedenklich realisierbar ist.

Die Aufgabe wird durch ein Armaturenbrett mit den Merkmalen des Anspruchs 1 gelöst.

Ein in das Armaturenbrett integriertes und auf den Fahrer ausgerichtetes Richtmikrofon in der erfindungsgemäßen Ausführungsform kann bei ausreichender Dimensionierung durch seine Richtwirkung ein ähnliches Signalrauschverhältnis wie ein am Wagenhimmel angebrachtes Mikrofon erreichen. Erfindungsgemäß ist vorgesehen, dass die Richtwirkung des Mikrofons durch die Formgebung des Armaturenbretts und die Anordnung der Mikrofonkapsel erzielt wird.

In dieser speziellen Ausführungsform weist das Armaturenbrett hierbei ein integriertes oder aufgesetztes Rohr mit Schlitz oder Durchbrechungen entsprechend dem oben beschriebenen Prinzip des Rohrschlitzmikrofons auf, wobei das Rohr auf den zu erfassenden Sprecher zielt, sowie optional einer Schallei.tung in Form eines an den Enden geschlossenen Rohres, das den Schall zu einer an geeigneter Stelle angebrachten Mikrofonkapsel führt.

In einer zweiten speziellen Ausführungsform sind Teile des Armaturenbretts in Form eines Ausschnitts aus einem Parabolspiegel geformt, um den Sprachschall des gewünschten Sprechers auf eine Stelle zu fokussieren, an der günstig eine oder einige wenige Mikrofonkapseln plaziert werden können. In dieser Ausführungsform kann optional eine zusätzliche Einrichtung zur Schallführung zwischen Brennpunkt und Mikrofonkapsel plaziert werden. Insbesondere ist es möglich, eine transparente Abdekkung der Anzeigeelemente des Kraftfahrzeugs so auszugestalten, daß die Fokussierung der Schallwellen durch die transparente Abdeckung erfolgt.

Die Mikrofonkapsel ist vorzugsweise auf einer Leiterplatte eines in das Armaturenbrett integrierten Anzeigeinstruments angeordnet. Hierdurch ergibt sich eine besonders kostengünstige Ausgestaltung eines Richtmikrofons.

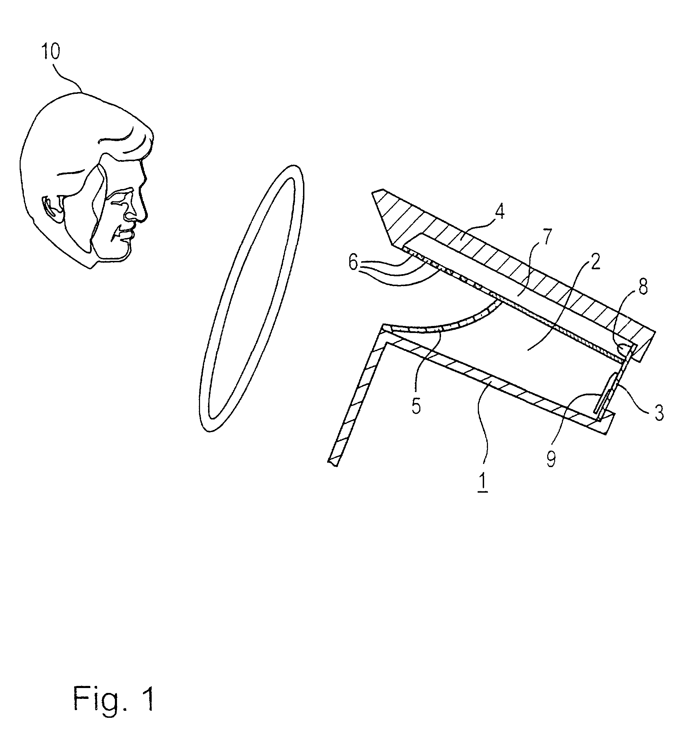

Die Erfindung wird nachfolgend anhand von Ausführungsbeispielen und der Zeichnung näher beschrieben.

Die einzige Figur zeigt einen Querschnitt des Armaturenbretts 1, wobei in einer Vertiefung 2 des Armaturenbretts 1 eine Instrumententafel 3 angeordnet ist. Bestandteil des Armaturenbretts 1 ist eine Blendabdeckung 4 der Instrumententafel 3. Die Vertiefung 2 vor der Instrumententafel 3 ist durch eine lichtdurchlässige Abdeckung 5 abgedeckt. Im Armaturenbrett 1 sind im Bereich der Blendabdeckung 4 Durchbrechungen 6 vorhanden. Diese Durchbrechungen 6 stellen eine Verbindung zwischen dem Fahrzeuginnenraum und einem rohrförmigen Hohlraum 7 im Armaturenbrett 1 her und realisieren zusammen den mechanischen Teil eines Rohrschlitzmikrofons. Im Hohlraum 7 kann an beliebiger Stelle hinter der Abdeckung 5 die Mikrofonkapsel 8 angeordnet werden. Besonders vorteilhaft ist dabei die Positionierung der Mikrofonkapsel 8 auf der Instrumententafel 3. Durch diese Anordnung wird eine Richtwirkung des Mikrofons mit Ausrichtung auf die Fahrerposition realisiert. Als Folge hiervon wird eine sehr gute Trennung der Sprache des Fahrers von sonstigen Geräuschen des Fahrzeuges und damit ein gutes Signalrauschverhältnis erreicht.

Zudem ist diese Ausführungsform kostengünstig realisierbar. Die Mikrofonkapsel 8 ist auf der Instrumententafel 3 befestigt und benötigt daher keine separate Befestigung und kein Gehäuse. Der Hohlraum 7 und die Durchbrechungen 6 werden bereits bei der Herstellung des Armaturenbretts vorgesehen, so daß auch hierdurch keine besonderen Zusatzkosten entstehen. Die Konstruktion hat weiterhin den Vorteil, daß sie unauffällig in das Armaturenbrett integriert werden kann. Das Design des Armaturenbretts wird praktisch nicht eingeschränkt.

Durch die Anordnung der Mikrofonkapsel 8 auf der Instrumententafel 3 ist zudem eine separate Verkabelung nicht erforderlich. Vielmehr wird die Mikrofonkapsel 8 mit auf der Leiterplatte aufgebrachten Leiterbahnen beispielsweise über ein Bussystem mit dem Sprachverarbeitungssystem verbunden. Die elektronischen Komponenten des Sprachverarbeitungssystems können an anderer geeigneter Stelle des Kraftfahrzeuges unabhängig von der Mikrofonkapsel 8 positioniert werden.

In einer weiteren Ausführungsform der Erfindung ist die lichtdurchlässige Abdeckung 5 so geformt, daß Sprache vom Fahrer 10 durch die Abdekkung 5 auf die Zone 6 in der Blendabdeckung 4 des Armaturenbretts 1 fokussiert wird. In dieser Zone 6 werden ein oder mehrere Mikrofone angebracht, um den fokussierten Schall aufzunehmen. Der Hohlraum 7 ist in dieser Ausführungsform nicht notwendig. Da der Schall phasengleich in der Zone 6 eintrifft, können im Fall mehrerer Mikrofone die Ausgangsignale der Mikrofone elektrisch zu einem einzigen Ausgangssignal aufsummiert und z.B. der Instrumententafel 3 zur weiteren Verarbeitung zugeführt werden. Die weitere Verarbeitung des Ausgangssignals des Mikrofons erfolgt wie in der ersten Ausführungsform.

Die Erfindung wurde anhand zweier Ausführungsbeispiele erläutert. Abwandlungen hiervon sind ohne weiteres möglich. Beispielsweise kann statt des rohrförmigen Hohlraums 7, der in das Armaturenbrett integriert ist, auch ein mit Schlitzen versehener separater rohrförmiger Körper auf dem Armaturenbrett oder unter der Blendabdeckung 4 des Armaturenbretts vorgesehen sein.

## Patentansprüche

1. Armaturenbrett (1) eines Kraftfahrzeuges mit einem Mikrofon, das mit einem elektronischen Gerät verbunden ist,
wobei das Mikrofon als Richtmikrofon mit keulenförmiger Richtcharakteristik ausgebildet ist und zur Aufnahme von Sprache eines Fahrzeuginsassen auf eine Sitzposition des Fahrzeuginsassen, insbesondere des Fahrers (10), ausgerichtet ist und die Richtwirkung des Mikrofons durch die Formgebung des Armaturenbretts (1) oder einer Blendabdeckung (4) erzielt wird.

2. Armaturenbrett nach Anspruch 1, **dadurch gekennzeichnet, dass** das Armaturenbrett (1) an seiner Unterseite, seiner Oberseite oder an einer sonstigen Seite eine Zone mit Durchbrechungen (6) mit einem dahinter liegenden rohrförmigen Hohlraum (7) aufweist, welche in Verbindung mit einer Mikrofonkapsel (8) ein Richtmikrofon des Typs Rohrschlitzmikrofon bilden, das so auf den Fahrer ausgerichtet ist, dass vom Fahrer gesprochene Schallsignale bevorzugt gegenüber aus anderen Richtungen eintretenden Signalen aufgenommen werden.

3. Armaturenbrett nach einem der vorhergehenden Ansprüche, **dadurch gekennzeichnet, dass** die Mikrofonkapsel (8) auf einer Leiterplatte eines in das Armaturenbrett (1) integrierten Anzeigeinstruments (9) angeordnet ist.

4. Armaturenbrett nach einem der vorhergehenden Ansprüche, **dadurch gekennzeichnet, dass** das Mikrofon mit keulenförmiger Richtcharakteristik durch eine Mikrofonzeile realisiert wird.

5. Armaturenbrett nach Anspruch 1, **dadurch gekennzeichnet, dass** das Armaturenbrett (1) Anzeigeinstrumente (8) enthält, die mit einer transparenten Abdeckung (5) versehen sind und dass eine Fokussierung der Schallwellen auf das Mikrofon durch die transparente Abdeckung (5) erfolgt.

6. Armaturenbrett nach einem der vorhergehenden Ansprüche, **dadurch gekennzeichnet, dass** mehrere Mikrofonkapseln vorhanden sind.

7. Armaturenbrett nach einem der vorhergehenden Ansprüche, **dadurch gekennzeichnet, dass** die weitere Verarbeitung des analogen elektrischen Ausgangssignals des Mikrofons oder der Mikrofonkapseln ganz oder teilweise auf der Leiterplatte des in das Armaturenbrett integrierten Anzeigeinstruments (9) erfolgt.

8. Armaturenbrett nach einem der vorhergehenden Ansprüche, **dadurch gekennzeichnet, dass** das Ausgangssignal des Mik-rofons einem Kommunikationsgerät, insbesondere der Frei-sprecheinrichtung eines Mobiltelefons zugeführt wird.

9. Armaturenbrett nach einem der vorhergehenden Ansprüche, **dadurch gekennzeichnet, dass** das Ausgangssignal des Mikrofons einem Spracherkennungssystem zugeführt wird.

10. Armaturenbrett nach Anspruch 9, **dadurch gekennzeichnet, dass** das Spracherkennungssystem Bestandteil eines Systems zur Sprachsteuerung von Kraftfahrzeugfunktionen ist.

## Claims

1. Dashboard (1) of a motor vehicle having a microphone which is connected to an electronic unit, wherein the microphone is embodied as a directional microphone with a lobe-shaped directional characteristic and, in order to pick up voice from a vehicle occupant, it is aligned with a sitting position of the vehicle occupant, in particular of the driver (10), and the directional effect of the microphone is achieved by the shaping of the dashboard (1) or of a baffle cover (4).

2. Dashboard according to Claim 1, **characterized in that** the dashboard (1) has on its underside, its upper side or on some other side a zone with holes (6) with a tubular cavity (7) located behind them, which holes (6) form, in conjunction with a microphone capsule (8), a directional microphone of the slotted-tube type of microphone which is aligned with the driver in such a way that sound signals uttered by the driver are received with preference over signals from other directions.

3. Dashboard according to one of the preceding claims, **characterized in that** the microphone capsule (8) is arranged on a printed circuit board of a display instrument (9) which is integrated into the dashboard (1).

4. Dashboard according to one of the preceding claims, **characterized in that** the microphone is implemented with a lobe-shaped directional characteristic by means of a microphone line.

5. Dashboard according to Claim 1, **characterized in that** the dashboard (1) contains display instruments (8) which are provided with a transparent cover (5), and **in that** the sound waves are focused onto the microphone by means of the transparent cover (5).

6. Dashboard according to one of the preceding claims, **characterized in that** there are a plurality of microphone capsules.

7. Dashboard according to one of the preceding claims, **characterized in that** the further processing of the analogue electric output signal of the microphone or of the microphone capsules is carried out entirely or partially on the printed circuit board of the display instrument (9) which is integrated into the dashboard.

8. Dashboard according to one of the preceding claims, **characterized in that** the output signal of the microphone is fed to a communications unit, in particular to the hands-free device of a mobile phone.

9. Dashboard according to one of the preceding claims, **characterized in that** the output signal of the microphone is fed to a voice recognition system.

10. Dashboard according to Claim 9, **characterized in that** the voice recognition system is a component of a system for the voice control of motor vehicle functions.

## Revendications

1. Tableau de bord (1) d'un véhicule automobile équipé d'un microphone, qui est relié à un appareil électronique, le microphone étant conçu comme microphone directionnel à caractéristique directionnelle en forme lobée et dirigé sur une place du passager, notamment du conducteur (10), pour l'enregistrement de voix d'un passager et l'effet directionnel du microphone étant obtenu par la conformation du tableau de bord (1) ou d'un cache (4).

2. Tableau de bord selon la revendication 1, **caractérisé en ce que** le tableau de bord (1) présente à sa face inférieure, à sa face supérieure ou à une face quelconque une zone pourvue de traversées (6) avec une cavité (7) tubulaire placée derrière, lesquelles forment un microphone directionnel du type microphone fendu cylindrique en liaison avec une capsule de microphone (8), lequel est dirigé sur le conducteur de sorte que les signaux sonores prononcés par le conducteur soient enregistrés de préférence à des signaux arrivant d'autres directions.

3. Tableau de bord selon l'une des revendications précédentes, **caractérisé en ce que** la capsule du microphone (8) est disposée sur une carte à circuits imprimés d'un instrument d'affichage (9) intégré dans le tableau de bord (1).

4. Tableau de bord selon l'une des revendications précédentes, **caractérisé en ce que** le microphone à caractéristique directionnelle e n forme lobée est réalisé par une rangée de microphones.

5. Tableau de bord selon la revendication 1, **caractérisé en ce que** le tableau de bord (1) contient des instruments d'affichage (8), qui sont pourvus d'un recouvrement transparent (5) et **en ce qu'**une focalisation des ondes sonores sur le microphone s'effectue via le recouvrement transparent (5).

6. Tableau de bord selon l'une des revendications précédentes, **caractérisé par** la présence de plusieurs capsules de microphones.

7. Tableau de bord selon l'une des revendications précédentes, **caractérisé en ce que** le traitement ultérieur du signal de sortie électrique analogique du microphone, ou des capsules de microphone, s'effectue en tout ou partie sur la carte à circuits imprimés de l'instrument d'affichage (9) intégrée dans le tableau de bord.

8. Tableau de bord selon l'une des revendications précédentes, **caractérisé en ce que** le signal de sortie du microphone est transmis à un appareil de communication, notamment au dispositif mains libres d'un téléphone mobile.

9. Tableau de bord selon l'une des revendications précédentes, **caractérisé en ce que** le signal de sortie du microphone est transmis à un système de reconnaissance vocale.

10. Tableau de bord selon la revendication 9, **caractérisé en ce que** le système de reconnaissance vocale est partie intégrante d'un système de commande vocale de fonctions d'un véhicule automobile.
